# EUROPEAN PATENT APPLICATION

(11) **EP 1 070 660 A1**
(43) Date of publication of application: **24.01.2001**
(21) Application number: 99202393.7
(22) Date of filing: 22.07.1999
(51) Int. Cl.: B62M 23/02

(54) **Electric drive for a bicycle**

(71) Applicant: MERIDA INDUSTRY CO., LTD., Meikang Village, Tatsun Hsiang, Changhua Hsien (TW)
(72) Inventor: Tseng, Diing-Huang, Tstsun Hsiang, Changhua Hsien (TW)
(74) Representative: Ferguson, Alexander

(57) **Abstract**

An electric drive includes a driven ratchet base (17) rotatably mounted on a crank axle, a chain wheel (52) secured to the driven ratchet base to rotate therewith, a drive bevel gear (41) for rotating the driven ratchet base, a drive ratchet base (25) for rotating the driven ratchet base in one direction only and having a first engaging bevel gear (256), a ring element (23) secured on the crank axle to rotate therewith, two fixed axles (232) extending from the ring element each having a second engaging bevel gear (26) meshing with the first engaging bevel gear, a retaining bevel gear (27) meshing with the second engaging bevel gear and fixedly retained by the housing, and a torsion sensing device (30) for sensing the torsion exerted on the crank axle.

## Description

The present invention relates to an electric drive for a bicycle.

The closest prior art of which the applicant is aware is disclosed in his U.S. Patent application serial No. 08/932,135, entitled by "ELECTRICAL DRIVE FOR A BICYCLE". A conventional electric drive can output a determined amount of power to work in conjunction with physical pedaling of a rider so as to drive a bicycle synchronously, thereby providing an auxiliary means of moving the bicycle. However, the conventional electric drive cannot precisely control power and voltages required for moving the bicycle, thereby wasting power.

In accordance with one aspect of the present invention, there is provided an electric drive for a bicycle which includes a crank axle rotatably mounted and having a first end portion and a second end portion, and a chain wheel disposed on the first end portion of the crank axle.

The electric drive comprises a housing mounted on the crank axle, a driven ratchet base rotatably mounted on the first end portion of the crank axle and formed with a driven bevel gear, wherein the chain wheel is secured to the driven ratchet base, a drive gear rotatably mounted in the housing and formed with a drive bevel gear meshing with the driven bevel gear to rotate the driven ratchet base, a drive ratchet base rotatably mounted on the mediate portion of the crank axle and engaged with the driven ratchet base to rotate the driven ratchet base along one direction only, a first engaging bevel gear formed on the drive ratchet base, a ring element secured on the mediate portion of the crank axle to rotate therewith, two diametrically opposite fixed axles each extending from the periphery of the ring element, two second engaging bevel gears each rotatably mounted on one of the two corresponding fixed axles and each meshing with the first engaging bevel gear, a retaining bevel gear fitted on the second end portion of the crank axle and meshing with each of the two second engaging bevel gears and fixedly retained by the inner wall of the housing, and a torsion sensing device mounted in the housing to sense a torsion exerted on the crank axle.

In the drawings:
Fig. 1 is a side view of a bicycle in accordance with the present invention;
Fig. 2 is top plan cross-sectional view of an electric drive for the bicycle in accordance with the present invention;
Fig. 3 is a perspective cross-sectional view of the torsion sensing device of the electric drive as shown in Fig. 2;
Fig. 4 is a front plan view of the torsion sensing device as shown in Fig. 3;
Fig. 5 is a front cross-sectional view of the electric drive as shown in Fig. 2;
Fig. 6 is a front cross-sectional view of the electric drive as shown in Fig. 2; and
Fig. 7 is a flow chart of the electric drive as shown in Fig. 2.

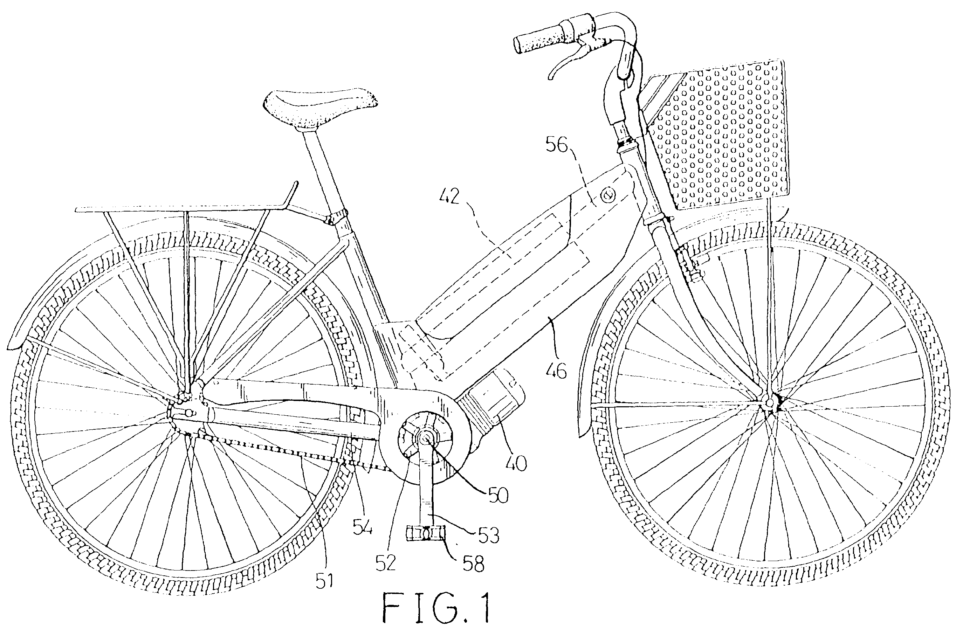

Referring to the drawings, and initially to Figs. 1-3, an electric drive in accordance with the present invention is provided for a bicycle which comprises a down tube (56), a pair of chain stays (54), a crank axle (50) rotatably disposed between the down tube (56) and the chain stays (54) and having a first end portion (502) and a second end portion (504), two crank arms (53) each fixedly mounted around the first end portion (502) and the second end portion (504) of the crank axle (50) respectively, a chain wheel (52) rotatably disposed on the first end portion (502) of the crank axle (50), and a drive chain (51) meshing with the chain wheel (52) to move therewith.

The electric drive comprises a housing (22) mounted around the crank axle (50) to partially contain the crank axle (50) therein and having an open end portion (226) fixedly connected with an end cap (14).

The chain wheel (52) is secured to a driven ratchet base (17) which is rotatably mounted on the first end portion (502) of the crank axle (50) and is formed with a driven bevel gear (176). A drive gear (41) is rotatably mounted in the housing (22) and is formed with a drive bevel gear (416) meshing with the driven bevel gear (176) to rotate the driven ratchet base (17).

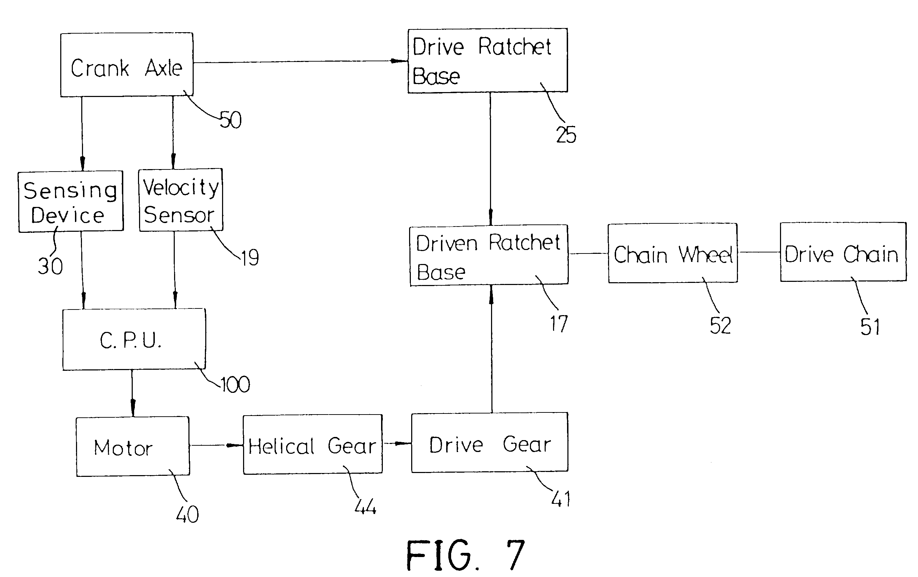

A driving mechanism is mounted on the housing (22) for rotating the drive gear (41) and includes a helical gear (44) for rotating the drive gear (41), a single direction bearing (20) mounted between the helical gear (44) and the drive gear (41) such that the drive gear (41) is rotated by the helical gear (44) along one direction only, a motor (40) attached to the housing (22) and located beneath the down tube (56) for rotating the helical gear (44), and a battery box (42) attached to the down tube (56) for supplying power to the motor (40). A chamber (46) is attached to the down tube 56 to contain a central processing unit (100) as shown in Fig. 7 therein (not shown in Fig. 1).

A drive ratchet base (25) is rotatably mounted on the mediate portion of the crank axle (50) and is engaged with the driven ratchet base (17) to rotate the driven ratchet base (17) in one direction only, and a first engaging bevel gear (256) is formed on the drive ratchet base (25).

A ring element (23) is secured on the mediate portion of the crank axle (50) to rotate therewith, and includes two diametrically opposite fixed axles (232) each extending from the periphery thereof. Two second engaging bevel gears (26) are each rotatably mounted on one of the two corresponding fixed axles (232) and each mesh with the first engaging bevel gear (256).

A retaining bevel gear (27) meshing with each of the two second engaging bevel gears (26) is fitted on the second end portion (504) of the crank axle (50) and is fixedly retained by the inner wall of the housing (22).

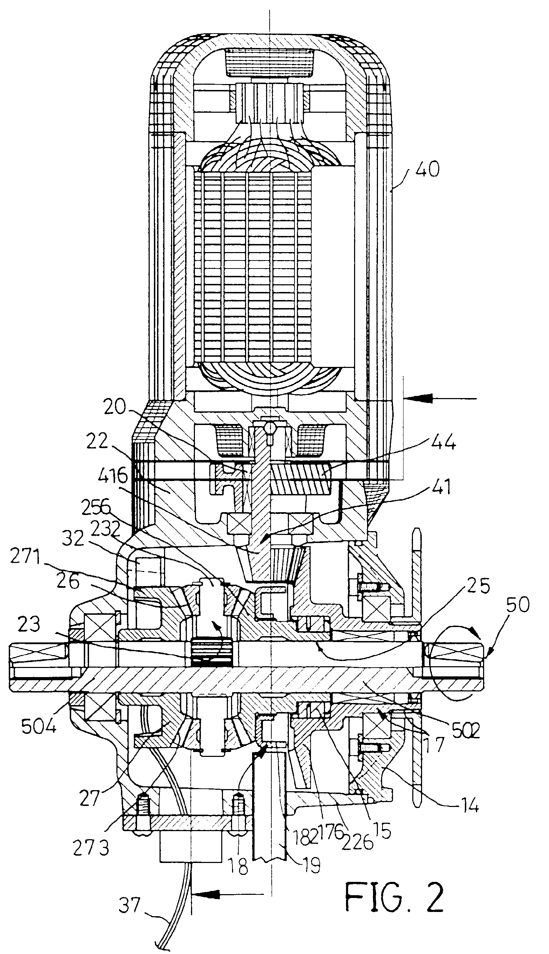

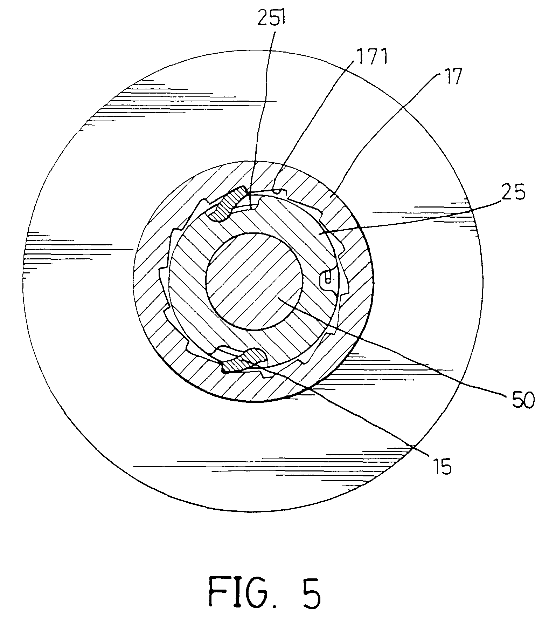

Referring to Fig. 5 with reference to Fig. 2, the driven ratchet base (17) includes a plurality of teeth (171) formed in the inner wall thereof, the drive ratchet base (25) contains a plurality of recesses (251) defined in the outer wall thereof. A plurality of pawls (15) each have a first end pivotally fitted in one of the corresponding recesses (251) and a second end detachably meshing with the teeth (171). In such a manner, the driven ratchet base (17) is rotated by the drive ratchet base (25) in one direction only.

In operation, referring to Figs. 1-7, a rider exerts a torque on the two crank arms (53) by pressing the pedals (58) so as to rotate the crank axle (50), thereby rotating the ring element (23) which drives the two second engaging bevel gears (26) to move therewith. At the same time, the lug (271) of the retaining bevel gear (27) is retained by the retaining block (31) and the stop (38) such that the two second engaging bevel gears (26) meshing with the fixed retaining bevel gear (27) can be rotated when the ring element (23) is rotated by the crank axle (50).

The drive ratchet base (25) is then rotated by means of the first engaging bevel gear (256) meshing with the two second engaging bevel gears (26), thereby rotating the driven ratchet base (17) in one direction only such that the chain wheel (52) meshing with the drive chain (51) can be rotated by the driven ratchet base (17) so as to move the bicycle forward.

In the meanwhile, the helical gear (44) is driven by the motor (40) to rotate the drive gear (41) in one direction only which rotates the driven ratchet base (17) by means of the drive bevel gear (416) meshing with the driven bevel gear (176) such that the chain wheel (52) can be rotated by the driven ratchet base (17) to move the bicycle, thereby providing a force to move the bicycle forward.

In such a manner, the bicycle can be driven to travel forward by physical work of the rider and simultaneously by electric power.

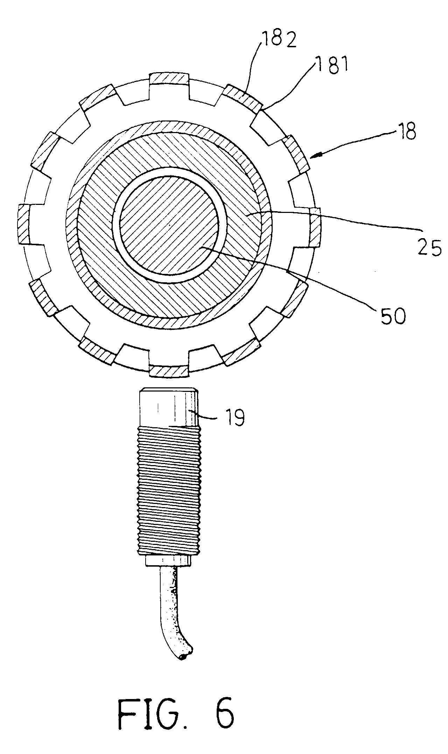

Referring to Fig. 6 with reference to Fig. 2, a velocity sensing race (18) is secured to the drive ratchet base (25) to rotate therewith, and a velocity sensor (19) is secured to the housing (22) and located adjacent to the velocity sensing race (18) to sense the rotational velocity of the crank axle (50). The velocity sensing race (18) includes a plurality of sensing faces (182) formed on the outer wall thereof and spaced at an equal distance from each other, and contains a plurality of cavities (181) each defined between two adjacent sensing faces (182). The velocity sensor (19) working in conjunction with the velocity sensing race (18) is used to detect the rotational velocity of the crank axle (50), and the operation thereof is conventional and will not be described in detail.

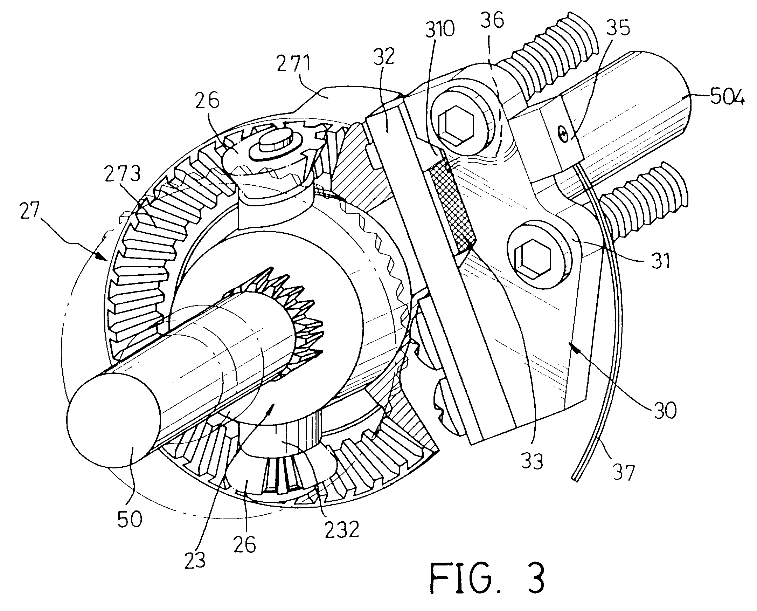

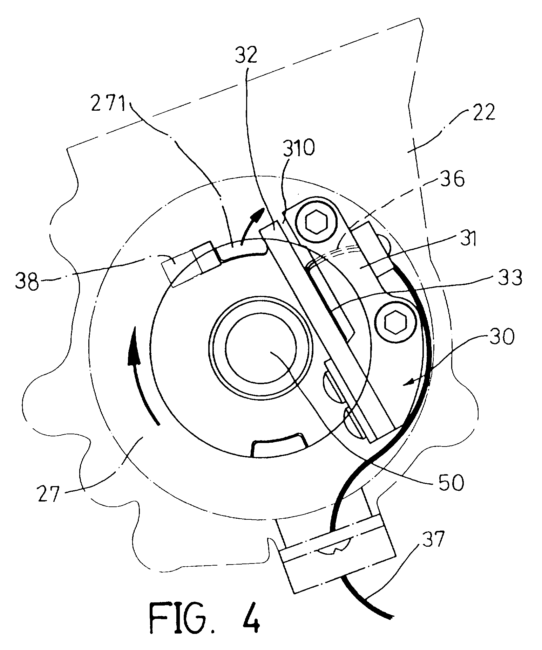

Referring now to Figs. 3 and 4 with reference to Figs. 1 and 2, a torsion sensing device (30) is mounted in the housing (22) to sense torsion exerted on the crank axle (50).

The retaining bevel gear (27) includes a meshing surface (273) meshing with the two second engaging bevel gears (26), and a lug (271) extending outward. The torsion sensing device (30) includes a retaining block (31) secured in the inner wall of the housing (22) and containing a recess (310) therein, a flexible torsion sensing strip (32) having a first end secured to the retaining block (31) and a second end abutting the lug (271) and located in the recess (310), a strain gauge (33) attached to the second end of the torsion sensing strip (32), and a stop (38) secured in the inner wall of the housing (22) and abutting the lug (271).

The torsion sensing device (30) includes an integrated circuit (35) attached to the retaining block (31), a resistance signal wire (36) having a first side attached to the strain gauge (33) and a second side attached to the integrated circuit (35), and a conducting wire (37) having a first side attached to the integrated circuit (35) and a second side attached to the central processing unit (100).

In operation, when the crank axle (50) is rotated, the retaining bevel gear (27) is rotated by the crank axle (50) to move the lug (271) which slightly compresses the second end of the torsion sensing strip (32) to move in the recess (310) until the torsion sensing strip (32) contacts the retaining block (31) which will stop further rotation of the retaining bevel gear (27). In such a manner, the displacement of the lug (271) is limited by the retaining block (31) and the stop (38) such that the retaining bevel gear (27) can be rotated by a small angle.

The strain gauge (33) includes a plurality of thin metallic wires (not shown) contained therein. When the metallic wires are deformed by moving the torsion sensing strip (32), the resistance of each of the metallic wires is changed such that the strain gauge (33) can be used to determine the strain of the torsion sensing strip (32) by variation of the resistance of the metallic wires.

In such a manner, the strain gauge (33) is used to detect the torsion exerted on the retaining bevel gear (27) by the crank axle (50) depending on variation of the resistance of the metallic wires, thereby measuring the torsion exerted on the crank axle (50) by the rider.

The resistance value is then conveyed via the resistance signal wire (36) to the integrated circuit (35) to form amplified voltage signals which are delivered to the central processing unit (100) via the conducting wire (37).

Referring now to Figs. 2 and 7, the velocity sensor (19) inputs signals indicating rotational velocity of the crank axle (50), and the torsion sensing device (30) inputs signals indicating torsion simultaneously exerted by the rider on the crank axle (50) into the central processing unit (100) which performs an analytic operation to determine power and voltages required for the motor (40) to drive the helical gear (44) by means such as pulse width modulation (P.W.M.), thereby precisely controlling the motor (40) to rotate the driven ratchet base (17) by the helical gear (44) in conjunction with the drive gear (41) to rotate the chain wheel (52), thereby providing proper assistance to move the bicycle.

In such a manner, the power supplied by the motor (40) to drive the drive gear (41) is optimally controlled, thereby optimizing the efficiency of the supplied electricity.

## Claims

1. An electric drive for a bicycle, said bicycle including a crank axle (50) rotatably mounted and having a first end portion (502) and a second end portion (504), and a chain wheel (52) disposed on said first end portion (502) of said crank axle (50), said electric drive comprising:
a housing (22) mounted on said crank axle (50);
a driven ratchet base (17) rotatably mounted on said first end portion (502) of said crank axle (50) and formed with a driven bevel gear (176), said chain wheel (52) secured to said driven ratchet base (17);
a drive gear (41) rotatably mounted in said housing (22) and formed with a drive bevel gear (416) meshing with said driven bevel gear (176) to rotate said driven ratchet base (17);
a drive ratchet base (25) rotatably mounted on the mediate portion of said crank axle (50) and engaged with said driven ratchet base (17) to rotate said driven ratchet base (17) in one direction only, a first engaging bevel gear (256) formed on said drive ratchet base (25);
a ring element (23) secured on said mediate portion of said crank axle (50) to rotate therewith, two diametrically opposite fixed axles (232) each extending from the periphery of said ring element (23);
two second engaging bevel gears (26) each rotatably mounted on one of said two corresponding fixed axles (232) and each meshing with said first engaging bevel gear (256);
a retaining bevel gear (27) fitted on said second end portion (504) of said crank axle (50) and meshing with each of said two second engaging bevel gears (26) and fixedly retained by the inner wall of said housing (22); and
a torsion sensing device (30) mounted in said housing (22) to sense the torsion exerted on said crank axle (50).

2. The electric drive in accordance with claim 1, wherein said retaining bevel gear (27) includes a lug (271) extending outward therefrom, and said torsion sensing device (30) includes a retaining block (31) secured in said housing (22) and containing a recess (310) therein, a flexible torsion sensing strip (32) having a first end secured to said retaining block (31) and a second end abutting said lug (271) and located in said recess (310), and a strain gauge (33) attached to said second end of said torsion sensing strip (32).

3. The electric drive in accordance with claim 2, wherein said torsion sensing device (30) includes an integrated circuit (35) attached to said retaining block (31), and a resistance signal wire (36) having a first end attached to said strain gauge (33) and a second side attached to said integrated circuit (35).

4. The electric drive in accordance with claim 2, wherein said torsion sensing device (30) includes a stop (38) secured in said housing (22) and abutting said lug (271).
